**Europäisches Patentamt**

**European Patent Office**

**Office européen des brevets**

(19)

(11) Veröffentlichungsnummer: **0 262 620 B1**

(12) ## EUROPÄISCHE PATENTSCHRIFT

(45) Veröffentlichungstag der Patentschrift: **21.11.91**

(51) Int. Cl.⁵: **G11B 23/04**, G11B 5/41

(21) Anmeldenummer: **87114064.6**

(22) Anmeldetag: **25.09.87**

(54) **Reinigungskassette für ein Magnetbandgerät.**

(30) Priorität: **30.09.86 DE 3633221**

(43) Veröffentlichungstag der Anmeldung:
**06.04.88 Patentblatt 88/14**

(45) Bekanntmachung des Hinweises auf die
Patenterteilung:
**21.11.91 Patentblatt 91/47**

(84) Benannte Vertragsstaaten:
**DE GB**

(56) Entgegenhaltungen:
EP-A- 0 198 318     DE-A- 3 300 418
GB-A- 2 000 623     US-A- 3 439 922
US-A- 3 761 994     US-A- 4 141 053
US-A- 4 272 796     US-A- 4 470 089
US-A- 4 514 777

PATENT ABSTRACTS OF JAPAN, Band 8, Nr.
165 (P-291)[1602], 31. Juli 1984; & JP-A-59 60
727 (FUJITSU K.K.) 06-04-1984

(73) Patentinhaber: **TANDBERG DATA A/S**
**Kjelsasveien 161 Postboks 9 Korsvoll**
**N-0808 Oslo 8(NO)**

(72) Erfinder: **Guttorm, Rudi**
**Edvard Griegsveien 17**
**N-01472 Fjellhamar(NO)**
Erfinder: **Solhjell, Erik**
**Konvallveien 30**
**N-00855 Oslo 8(NO)**

(74) Vertreter: **Goddar, Heinz J., Dr. et al**
**FORRESTER & BOEHMERT Widenmayerstras-**
**se 4/I**
**W-8000 München 22(DE)**

## Beschreibung

Die Erfindung bezieht sich auf eine Reinigungskassette für ein Magnetbandgerät gemäß dem Oberbegriff des Patentanspruches 1.

Es ist bereits allgemein bekannt, zum Reinigen eines Magnetkopfs und einer Bandantriebsrolle für das Magnetband in einem Magnetbandgerät eine Kassette zu verwenden, die anstelle einer mit dem Magnetband versehenen Kassette in das Magnetbandgerät eingeführt wird. Anstelle des Magnetbands enthalten diese Reinigungskassetten Reinigungseinrichtungen für den Magnetkopf und gegebenenfalls auch für eine das Magnetband antreibende Bandantriebsrolle. Derartige Reinigungskassetten sind beispielsweise aus der US-PS 4,445,158 oder der US-PS 4,272,796 bekannt. Bei diesen bekannten Reinigungskassetten wird die Reinigungseinrichtung für den Magnetkopf jeweils von einer Antriebsanordnung angetrieben, die normalerweise die Spulen mit dem Magnetband in der Magnetbandkassette antreiben. Damit ist es möglich, gleichzeitig den Magnetkopf und die Bandantriebsrolle zu reinigen und die Reinigungselemente für den Magnetkopf und die Bandantriebsrolle befinden sich nebeneinander an derselben Seite der Magnetbandkassette.

Es sind Magnetbandgeräte bekannt, bei denen eine Magnetbandkassette verwendet wird, bei der über eine Bandantriebseinrichtung sowohl das Band bewegt wird als auch über ein die Spulen umfassendes Gummiband die Spule angetrieben werden. Es wurde auch bereits eine Reinigungskassette für ein derartiges Magnetbandgerät in der hier nach Art. 54(3) EPÜ zu bewertenden EP-A-198 318 vorgeschlagen, bei der eine Reinigungseinrichtung für den Magnetkopf durch die Bandantriebsrolle angetrieben wird. Da die Bandantriebsrolle zum Antrieb der Reinigungseinrichtung verwendet wird, ist ihre gleichzeitige Reinigung mit dieser Reinigungskassette nicht ohne weiteres möglich.

Der Erfindung liegt daher die Aufgabe zugrunde, eine Reinigungskassette anzugeben, bei der die Reinigungseinrichtung für den Magnetkopf über die Bandantriebsrolle betätigt wird und mittels der dennoch eine Reinigung der Bandantriebsrolle möglich ist.

Erfindungsgemäß wird die Aufgabe bei der Reinigungskassette der eingangs genannten Art durch die im kennzeichnenden Teil des Patentanspruchs 1 angegebenen Merkmale gelöst.

Die Reinigungskassette gemäß der Erfindung hat den Vorteil, daß sie sehr gute Reinigungseigenschaften aufweist, da sie, je nach dem in welcher Richtung sie in das Magnetbandgerät eingeführt wird, gezielt entweder den Magnetkopf oder die Bandantriebsrolle reinigt.

Zweckmäßigerweise wird sowohl für die Reinigung des Magnetkopfs als auch für die Reinigung der Bandantriebsrolle ein gleiches oder dasselbe Reinigungselement aus einem flexiblen Werkstoff, wie beispielsweise Schaumstoff oder Filz verwendet. Zum Beseitigen der Ablagerungen ist es dabei günstig, das Reinigungselement mit Rillen zu versehen. Diese Rillen können an einer Seite oder an zwei Seiten des Reinigungselements vorgesehen werden, so daß je nach Anwendungsfall eine optimale Reinigung des Magnetkopfs bzw. der Bandantriebsrolle erreicht wird. Das Reinigungselement für die Bandantriebsrolle kann parallel oder senkrecht zu der Längswand der Reinigungskassette angeordnet werden, die der Seite gegenüberliegt, an der die Reinigungseinrichtung für den Magnetkopf angeordnet ist.

Die Reinigungselemente werden zweckmäßigerweise auswechselbar ausgebildet. Die Reinigungselemente können zu diesem Zweck mit einer Öffnung versehen sein, mittels der sie über einen verrastbaren flexiblen Streifen gesteckt werden können. Es ist auch möglich, das Reinigungselement für die Bandantriebsrolle in Längsrichtung in eine Öffnung der Reinigungskassette hineinzuschieben.

Ausführungsbeispiele der Reinigungskassette gemäß der Erfindung werden im folgenden anhand von Zeichnungen näher erläutert. Es zeigen

FIG 1 eine teilweise aufgebrochene Draufsicht auf eine erste Ausführungsform der Reinigungskassette,

FIG 2 eine Seitenansicht der in FIG 1 dargestellten Reinigungskassette,

FIG 3 verschiedene Ausführungsformen von Reinigungselementen,

FIG 4 eine teilweise aufgebrochene Draufsicht einer zweiten Ausführungsform der Reinigungskassette und

FIG 5 eine Seitenansicht der in FIG 4 dargestellten Reinigungskassette.

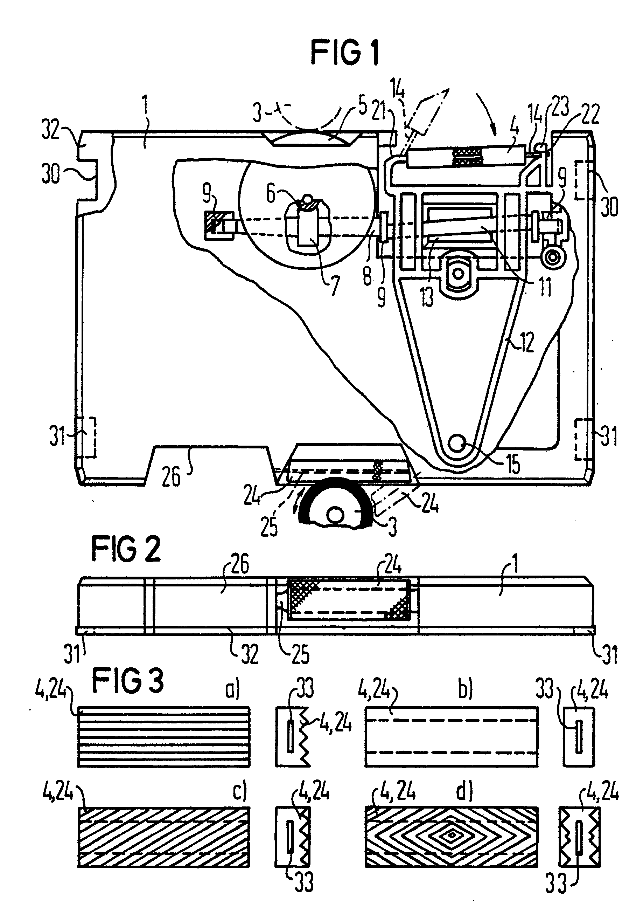

Die in FIG 1 dargestellte Reinigungskassette 1 einer ersten Ausführungsform der Erfindung weist äußere Abmessungen auf, die denen einer im Handel erhältlichen mit Magnetband versehenen Kassette, die auch unter der Bezeichnung 1/4-Inch-Cartridge bekannt ist, weitgehend entsprechen. Der Teil, der in FIG 1 dargestellten Reinigungskassette 1, der die Reinigung des Magnetkopfs betrifft, ist in der europäischen Patentanmeldung EP-A-198 318 ausführlich beschrieben. Nach dem Einführen der Kassette 1 in ein entsprechendes Magnetbandgerät mit einem Magnetkopf und einer normalerweise für den Antrieb des Magnetbands vorgesehenen Bandantriebsrolle 3 derart, daß die Frontseite eines nicht dargestellten Magnetkopfs an einem Reinigungselement 4 einer in der Kassette 1 enthaltenen Reinigungseinrichtung anliegt und eine gestrichelt dargestellte Bandantriebsrolle 3 an einem Antriebsrad 5 der Kassette 1 anliegt. Das Antriebsrad 5 ist beispielsweise als Reibrad ausgebildet und enthält an seinem Umfang eine Beschichtung aus Gummi. Auf der Achse des Antriebsrads 5 ist eine Schnecke 6 angeordnet, die beispielsweise mit dem Antriebsrad 5 eine Baueinheit bildet. Die Schnecke 6 ist Teil eines Schneckengetriebes und ist einem Schneckenrad 7 zugeordnet, das auf einer Exzenteranordnung 8 angeordnet ist. Die Exzenteranordnung 8 wird aus einer in Lagern 9 gelagerten Welle, auf der auch das Schneckenrad 7 angeordnet ist und einer Exzenterwelle 11 gebildet.

Die Exzenterwelle 11 ist gegen die Achse der Welle 10 geneigt angeordnet und bei einer Drehung der Exzenteranordnung 8 wird ein Träger 12 in eine Hin- und Herbewegung und gleichzeitig in eine Schwingbewegung, die auch als eine Schwenkbewegung oder teilweise Drehbewegung aufgefaßt werden kann, versetzt. Ein Träger 12 ist an seinem hinteren Ende durch ein kugelförmiges Teil 15 gelagert und umgreift die Exzenterwelle 11 auf der einen Seite, beispielsweise der Oberseite durch seitliche Auflageflächen und auf der anderen Seite, beispielsweise der Unterseite durch eine Lippe 13. An der Vorderseite des Trägers ist ein schwenkbarer Streifen 14 zu erkennen, der über ein Gelenk 21 am Träger 12 befestigt ist. Wenn der Träger aus Kunststoff ausgebildet ist, ist das Gelenk beispielsweise als Filmscharnier ausgebildet. Der Streifen 14 weist an seinem anderen Ende eine Rastnase 22 auf, die in eine entsprechende Öffnung 23 des Trägers 12 einschiebbar ist. Über den Streifen wird das Reinigungselement 4 geschoben, das eine entsprechende Längsöffnung aufweist. Das Reinigungselement 4 ist auswechselbar auf dem Streifen 14 befestigt und kann, wenn dieser herausgeklappt ist, einfach ausgetauscht oder gedreht werden, so daß es von beiden Seiten benutzt werden kann. Das Reinigungselement 4 ist kissen- oder quaderförmig aufgebaut. Es besteht aus einem flexiblen Werkstoff, beispielsweise Schaumstoff und kann mit einer Reinigungsflüssigkeit getränkt werden.

Zum Reinigen der Bandantriebsrolle 3 wird die Kassette 1 in der entgegengesetzten Richtung in das Magnetbandgerät eingeführt, so daß die nun durchgezogen dargestellte Bandantriebsrolle 3 an einem zugehörigen Reinigungselement 24 anliegt, das in gleicher Weise ausgebildet sein kann, wie das Reinigungselement 4. Auch dieses Reinigungselement 24 ist auf einem Streifen 25 angeordnet, der in ähnlicher Weise ausgebildet ist, wie der Streifen 14 und ebenfalls eine Rastnase aufweist und aus der Kassette 1 zum Auswechseln des Reinigungselements 24 herausgeschwenkt werden kann, wie es gestrichelt dargestellt ist. Das Reinigungselement 24 und eine entsprechende Öffnung 26 für den Magnetkopf sind auf der dem Reinigungselement 4 gegenüberliegenden Seite der Kassette 1 angeordnet, so daß, je nach dem in welcher Richtung die Kassette 1 eingeführt wird, entweder der Magnetkopf oder die Bandantriebsrolle 3 gereinigt werden. Normalerweise enthält die Kassette 1 nur Ausschnitte 30 in der Grundplatte, mit denen ein Einführen der Kassette in der falschen Richtung verhindert werden soll. Da nun aber die Kassette 1 in beiden Richtungen in das Magnetbandgerät eingeführt werden kann, je nach dem ob der Magnetkopf oder die Bandantriebsrolle 3 gereinigt werden sollen, werden zwei zusätzliche Ausschnitte 31 in der Grundplatte 32 vorgesehen.

Wenn die Kassette 1 in das Magnetbandgerät eingeführt ist und die Bandantriebsrolle 3 das Reinigungselement 4 berührt, kann die Bandantriebsrolle 3 in beiden Drehrichtungen angetrieben werden und durch die Berührung mit dem Reinigungselement 24 wird die Bandantriebsrolle 3 gereinigt.

Bei der in FIG 2 dargestellten Seitenansicht ist zu erkennen, daß das Reinigungselemente 24 in gleicher Weise ausgebildet ist wie das Reinigungselement 24 und ebenfalls auf einen Streifen 25 mit einer Rastnase aufgesteckt ist. Weiterhin sind die zusätzlichen Ausschnitte 31 in der Grundplatte 32 der Kassette 1 zu erkennen.

Die Reinigungselemente 4 und 24 können unterschiedliche Oberflächen aufweisen. Einige Ausführungsbeispiele sind in den FIG 3a bis 3d dargestellt.

Bei der in FIG 3a dargestellten Ausführungsform weist das Reinigungselement 4 bzw. 24 auf einer Seite Längsrillen auf. Diese Seite eignet sich insbesondere für die Reinigung des Magnetkopfs, während für die Reinigung der Bandantriebsrolle 3 die Rückseite ohne die Rillen verwendet werden kann. Zu diesem Zweck kann das Reinigungselement auf den Streifen 14 oder 25 in der einen oder in der anderen Richtung aufgesteckt werden.

Bei der Darstellung in FIG 3b ist das Reinigungselement 4 bzw. 24 symmetrisch aufgebaut, so daß es beliebig auf die Streifen 14 bzw. 25 aufgesteckt werden kann.

Das in FIG 3c dargestellte Reinigungselement 4 bzw. 24 weist schräg verlaufende Rillen auf und dieses Reinigungselement kann ebenfalls sowohl für die Reinigung des Magnetkopfs als auch für die Reinigung der Bandantriebsrolle 3 verwendet werden, wobei auch auf der Rückseite die Rillen vorgesehen werden können und dann das Reinigungselement mittels der Längsöffnung 33 beliebig auf die Streifen 14 bzw. 25 aufgesteckt werden kann.

Entsprechendes gilt für das in FIG 3d dargestellte Reinigungselement 4 bzw. 24, bei dem die Rillen rautenförmig auf beiden Seiten angeordnet sind.

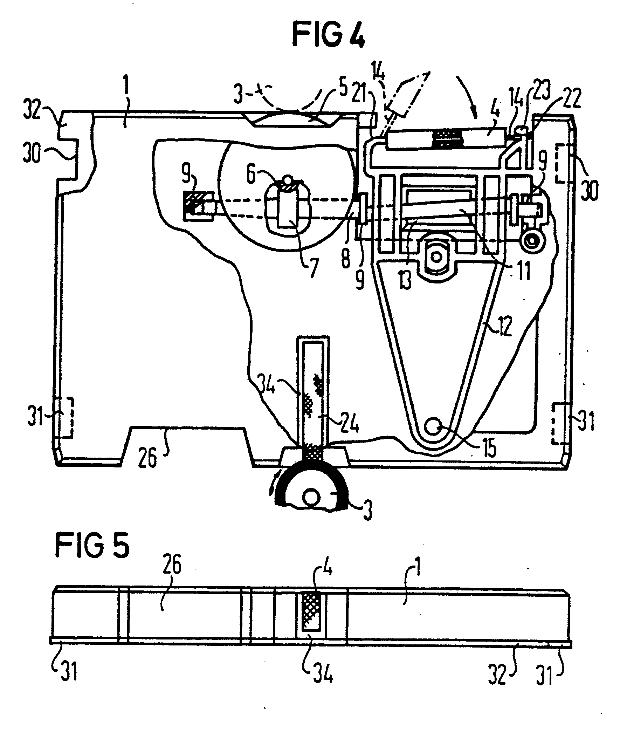

Die in FIG 4 dargestellte zweite Ausführungsform der Reinigungskassette 1 enthält für die Reinigung des Magnetkopfs dieselben Bauteile wie die in FIG 1 dargestellte Reinigungskassette 1. Zur Reinigung der Bandantriebsrolle 3 ist jedoch das Reinigungselement 24 senkrecht zur Längswand angeordnet, so daß nicht die Längsseite sondern die Querseite des Reinigungselements 24 die Bandantriebsrolle 3 reinigt. Das Reinigungselement 24 ist längs in eine entsprechende Öffnung eingeschoben und drückt federnd gegen die Bandantriebsrolle 3. Auch hier kann das Reinigungselement 24 mit dem Reinigungselement 4 identisch sein, das die Reinigung des Magnetkopfs vornimmt. Es ist jedoch auch möglich, andere Reinigungselemente für die Reinigung der Bandantriebsrolle 3 zu verwenden.

Bei der in FIG 5 dargestellten Seitenansicht der Kassette 1 ist zu erkennen, daß das Reinigungselement 24 der Länge nach in die Öffnung 34 eingeschoben ist. Auch bei dieser Kassette 1 sind Ausschnitte 31 in der Grundplatte 32 vorgesehen, um die Kassette 1 wahlweise in der einen oder der entgegengesetzten Richtung in das Magnetbandgerät einführen zu können.

**Patentansprüche**

1.  Reinigungskassette für ein Magnetbandgerät, die anstelle einer mit Magnetband versehenen Kassette in das Magnetbandgerät eingeführt wird und die eine Reinigungseinrichtung für einen Magnetkopf des Magnetbandgeräts sowie ein weiteres Reinigungselement zum Reinigen einer Bandantriebsrolle enthält, **dadurch gekennzeichnet,** daß das weitere Reinigungselement (24) an der dem Reinigungselement (4) für den Magnetkopf gegenüberliegenden Seite der Reinigungskassette (1) vorgesehen ist, so daß in Abhängigkeit von der Richtung, in der die Reinigungskassette (1) in das Magnetbandgerät eingeführt wird, entweder der Magnetkopf oder die Bandantriebsrolle (3) gereinigt wird.

2.  Reinigungskassette nach Anspruch 1, **dadurch gekennzeichnet,** daß das weitere Reinigungselement (24) parallel zur Längswand der Reinigungskassette (1) angeordnet ist.

3.  Reinigungskassette nach Anspruch 1, **dadurch gekennzeichnet,** daß das weitere Reinigungselement (24) senkrecht zur Längswand der Reinigungskassette (1) angeordnet ist.

4.  Reinigungskassette nach einem der Ansprüche 1 bis 3, **dadurch gekennzeichnet,** daß das weitere Reinigungselement (24) auswechselbar an der Reinigungskassette (1) angeordnet ist.

5.  Reinigungskassette nach einem der Ansprüche 1 bis 4, **dadurch gekennzeichnet,** daß das weitere Reinigungselement (24) auf einem Streifen (25) aufsteckbar angeordnet ist.

6.  Reinigungskassette nach Anspruch 3, **dadurch gekennzeichnet,** daß das weitere Reinigungselement (24) in eine Öffnung (34) einsteckbar ist.

7.  Reinigungskassette nach einem der Ansprüche 1 bis 6, **dadurch gekennzeichnet,** daß das für die Reinigung des Magnetkopfs vorgesehene Reinigungselement (4) und das für die Reinigung der Bandantriebsrolle (3) vorgesehene Reinigungselement (24) gleichartig ausgebildet sind.

8.  Reinigungskassette nach einem der Ansprüche 1 bis 7, **dadurch gekennzeichnet,** daß die Reinigungselemente (4, 24) quaderförmig ausgebildet sind und aus einem flexiblen Werkstoff bestehen.

9.  Reinigungskassette nach einem der Ansprüche 1 bis 8, **dadurch gekennzeichnet,** daß die Reinigungselemente (4, 24) mit Rillen versehen sind.

10. Reinigungskassette nach Anspruch 9, **dadurch gekennzeichnet,** daß die Rillen nur auf einer Seite des Reinigungselements (4, 24) vorgesehen sind.

11. Reinigungskassette nach einem der Ansprüche 8 bis 10, **dadurch gekennzeichnet,** daß das Reinigungselement (4, 24) aus einem Schaumstoff besteht.

**Claims**

1.  A cleaning cassette for a magnetic tape apparatus, such cassette being introduced into the apparatus instead of a cassette provided with magnetic tape, and containing a cleaning means for a magnetic head of the magnetic tape apparatus and another cleaning element for cleaning a tape drive roller, characterised in that the other cleaning element (24) is provided on that side of the cleaning cassette (1) which is remote from the cleaning element (4) for the magnetic head so that either the magnetic head or the tape drive roller (3) is cleaned depending upon the direction in which the cleaning cassette (1) is introduced into the magnetic tape apparatus.

2.  A cleaning cassette according to claim 1, characterised in that the other cleaning element (24) is disposed parallel to the longitudinal wall of the cleaning cassette (1).

3. A cleaning cassette according to claim 1, characterised in that the other cleaning element (24) is disposed at right angles to the longitudinal wall of the cleaning cassette (1).

4. A cleaning cassette according to any one of claims 1 to 3, characterised in that the other cleaning element (24) is disposed on the cleaning cassette (1) so as to be replaceable.

5. A cleaning cassette according to any one of claims 1 to 4, characterised in that the other cleaning element (24) is pushable on to a strip (25).

6. A cleaning cassette according to claim 3, characterised in that the other cleaning element (24) is insertable into an aperture (34).

7. A cleaning cassette according to any one of claims 1 to 6, characterised in that the cleaning element (4) provided for cleaning the magnetic head and the cleaning element (24) provided for cleaning the tape drive roller (3) are of identical construction.

8. A cleaning cassette according to any one of claims 1 to 7, characterised in that the cleaning elements (4, 24) are block-shaped and consist of a flexible material.

9. A cleaning cassette according to any one of claims 1 to 8, characterised in that the cleaning elements (4, 24) are provided with grooves.

10. A cleaning cassette according to claim 8, characterised in that the grooves are provided on only one side of the cleaning element (4, 24).

11. A cleaning cassette according to any one of claims 8 to 10, characterised in that the cleaning element (4, 24) consists of a foam material.

**Revendications**

1. Cassette de nettoyage pour un appareil à bande magnétique, qui est introduite dans l'appareil à bande magnétique au lieu d'une cassette munie d'une bande magnétique et qui contient un dispositif de nettoyage de la tête magnétique de l'appareil à bande magnétique, ainsi qu'un autre élément de nettoyage destiné à nettoyer un galet d'entraînement de la bande, caractérisée en ce que l'autre élément de nettoyage (24) est prévu du côté de la cassette de nettoyage (1) qui est opposé à l'élément de nettoyage (4) de la tête magnétique, de manière à nettoyer soit la tête magnétique, soit le galet (3) d'entraînement de la bande en fonction du sens dans lequel la cassette de nettoyage (1) est introduite dans l'appareil à bande magnétique.

2. Cassette de nettoyage suivant la revendication 1, caractérisée en ce que l'autre élément de nettoyage (24) est disposé parallèlement à la paroi longitudinale de la cassette de nettoyage (1).

3. Cassette de nettoyage suivant la revendication 1, caractérisée en ce que l'autre élément de nettoyage (24) est disposé perpendiculairement à la paroi longitudinale de la cassette de nettoyage (1).

4. Cassette de nettoyage suivant l'une des revendications 1 à 3, caractérisée en ce que l'autre élément de nettoyage (24) est monté sur la cassette de nettoyage (1) de manière à pouvoir être remplacé.

5. Cassette de nettoyage suivant l'une des revendications 1 à 4, caractérisée en ce que l'autre élément de nettoyage (24) peut être enfilé sur un mandrin (25).

6. Cassette de nettoyage suivant la revendication 3, caractérisée en ce que l'autre élément de nettoyage (24) peut être enfilé dans une ouverture (34).

7. Cassette de nettoyage suivant l'une des revendications 1 à 6, caractérisée en ce que l'élément de nettoyage (4) prévu pour nettoyer la tête magnétique et l'élément de nettoyage (24) prévu pour nettoyer le galet (3) d'entraînement d'une bande sont constitués de manière identique.

8. Cassette de nettoyage suivant l'une des revendications 1 à 7, caractérisée en ce que les éléments de nettoyage (4, 24) sont de forme parallélépipédique et sont en un matériau souple.

9. Cassette de nettoyage suivant l'une des revendications 1 à 8, caractérisée en ce que les éléments de nettoyage (4, 24) sont munis de gorges.

10. Cassette de nettoyage suivant la revendication 9, caractérisée en ce que les gorges ne sont prévues que d'un côté de l'élément de nettoyage (4, 24).

11. Cassette de nettoyage suivant l'une des revendications 8 à 10, caractérisée en ce que l'élément de nettoyage (4, 24) est en une matière alvéolaire.

## FIG 1

## FIG 2

## FIG 3

a)

b)

c)

d)

# FIG 4

# FIG 5